# EUROPEAN PATENT APPLICATION

(11) **EP 0 766 273 A2**
(43) Date of publication of application: **02.04.1997**
(21) Application number: 96202687.8
(22) Date of filing: 26.09.1996
(51) Int. Cl.: H01F 27/32, H01F 27/08

(54) **Transformer structure**

(30) Priority: 28.09.1995 JP 277014/95
(71) Applicant: Yamamoto, Makoto, Nagano (JP)
(72) Inventor: Yamamoto, Makoto, Nagano (JP)
(74) Representative: Falcetti, Carlo

(57) **Abstract**

Disclosed is a transformer structure which is blocked by coating coils (10) of a power distribution transformer (Tr1) with an insulating molding material (12), for example, a synthetic resin such as epoxy or a synthetic rubber such as butyl rubber, to a predetermined thickness. The insulating molding material (12) contains an axially opening center bore defined along the coil (10) axis and a plurality of radially opening vents (16) communicating to the center bore (14), and the outside air is distributed through the center bore (14) and the vents (16) so as to control rise in the temperature of the transformer. The coils (10) of the power distribution transformer (Tr1) may be blocked integrally with those of a current transformer (Tr2) and of a potential transformer (PT), to be electrically connected one another based on the principle of electromagnetic induction with no direct contact with one another, by charging such insulating molding material (12) around these coils. Distribution of the outside air may be enhanced by disposing air blowers (22).

## Description

### BACKGROUND OF THE INVENTION

### Field of the Invention

This invention relates to a transformer structure which can cool efficiently a blocked transformer formed by coating coils of a power distribution transformer with an insulating molding material to a predetermined thickness.

### Description of the Related Art

In a cubicle installed in an electric power substation and the like are disposed in a predetermined arrangement power distribution transformers, as major elements, and current transformers for current measurement, potential transformers for voltage measurement, breakers, etc., and these apparatuses are adapted to be connected to one another by cables. In the power distribution transformer, heat is generated by the loss and the like occurring inside, and the temperature of the transformer is elevated to give a low output and to have reduced life, disadvantageously. Thus, there is generally known an oil-filled transformer in which a transformer main body is immersed in an insulating oil charged in an iron box so that it may be cooled by the oil.

In the oil-filled transformer, although the transformer can be cooled by the insulating oil, it is likely that the insulating oil leaks if the transformer is accidentally fallen down by an earthquake etc. to let a fire break out. Therefore, there is proposed a dry type molded transformer, in which transformer coils are coated with a molding material such as a synthetic resin. Unlike the prior art oil-filled transformer, the dry type molded transformer is free from the fear of oil leakage causative of fire, even if it fells down, so that it is very safe. However, in the molded transformer, since only the outer surface of the molding material covering the transformer is cooled by the air brought into contact with it, the rise in the temperature of the transformer in the molding material cannot be controlled, inevitably leading to reduction in the output and in life.

### SUMMARY OF THE INVENTION

In view of the disadvantages inherent in the prior art described above, this invention is proposed so as to solve them successfully, and it is an objective of this invention to provide a transformer structure which can control rise in the temperature of the transformer and thus can avoid reduction in the output and in life.

In order to attain the intended objective, the transformer structure according to this invention is of a blocked transformer, which is formed by coating coils of a power distribution transformer with an insulating molding material, for example, a synthetic resin such as epoxy or a synthetic rubber such as butyl rubber to a predetermined thickness, and is characterized in that the insulating molding material contains an axially opening center bore defined along the coil axis and a plurality of vents communicating to the center bore and opening radially outward, and that the outside air is distributed through the center bore and the vents so as to control rise in the temperature of the transformer.

In order to attain the intended objective, the transformer structure according to another aspect of this invention is of an integrated transformer functioning as a power receiving and transforming equipment, which is formed by disposing coils of a current transformer and of a potential transformer adjacent to coils of a power distribution transformer to electrically connect these coils to one another based on the principle of electromagnetic induction and by charging an insulating molding material, for example, a synthetic resin such as epoxy or a synthetic rubber such as butyl rubber, around the coils of the power distribution transformer and those of the current transformer and of the potential transformer so as to integrate these coils into one block, and is characterized in that the insulating molding material contains an axially opening center bore defined along the coil axis and a plurality of vents communicating to the center bore and opening radially outward, and that the outside air is distributed through the center bore and the vents so as to control rise in the temperature of the transformer.

### BRIEF DESCRIPTION OF THE DRAWINGS

The features of the present invention that are believed to be novel are set forth with particularity in the appended claims.

The invention, together with the objects and advantages thereof, may best be understood by reference to the following description of the presently preferred embodiments taken in conjunction with the accompanying drawings in which:
Fig. 1 is a perspective appearance of a transformer to which the transformer structure according to a first embodin;ent of this invention is applied;
Fig. 2 is an explanatory view schematically showing the structure of the transformer according to the first embodiment;
Fig. 3 is a perspective appearance of major portions of a transformer to which the transformer structure according to a second embodiment of this invention is applied;
Fig. 4 is an explanatory view schematically showing the structure of the transformer according to the second embodiment;
Fig. 5 is an explanatory view schematically showing the structure of a transformer according to a third embodiment of this invention; and
Fig. 6 is an explanatory view schematically showing the structure of a transformer according to a fourth embodiment of this invention;

### DETAILED DESCRIPTION OF THE PREFERRED EMBODIMENTS

Next, the transformer structure according to this invention will be described by way of preferred embodiments referring to the attached drawings.

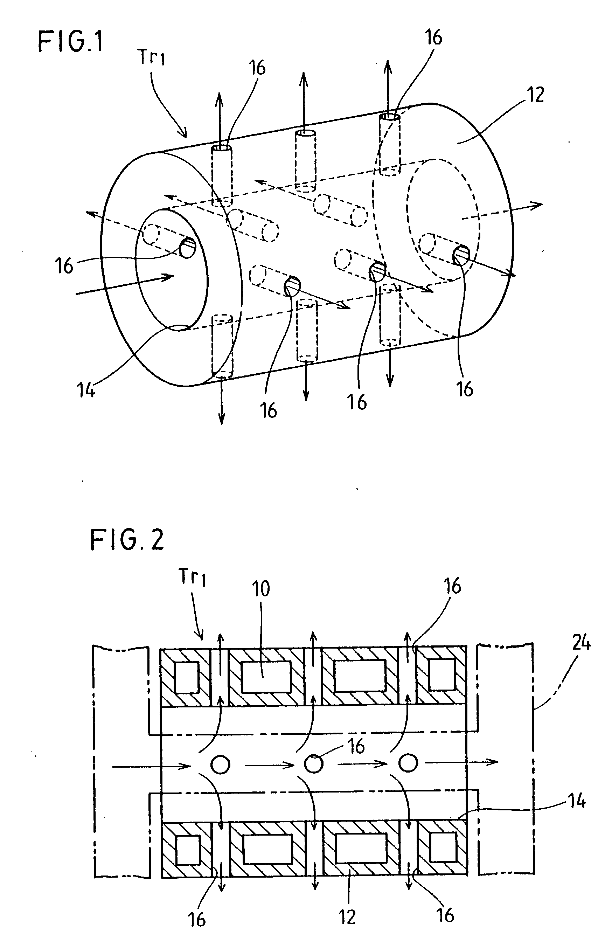

### (First embodiment: Figures 1 and 2)

Fig. 1 is a perspective appearance of a transformer to which the transformer structure according to a first embodiment of this invention is applied, and this transformer Trl is blocked by coating a coil 10 (Fig. 2) (of a single phase or of a combination such as a three-phase) thereof with an insulating molding material 12 to a predetermined thickness. It should be noted that in Fig. 2 while a primary coil and a secondary coil of the transformer Tr1 are depicted as a single coil 10, the primary coil and the secondary coil are actually arranged concentrically to be spaced from each other in the diametrical direction. In the insulating molding material 12 of this transformer Tr1, a center bore 14 is formed along the axis of the coil 10 to open in the axial direction, and also a plurality of vents 16 communicating to the center bore 14 and opening radially outward are defined in a predetermined pattern, as shown in Fig. 2 and 1. Incidentally, the vents 16 are defined at such positions as they may not interfere with the coil 10. As the insulating molding material 12, a synthetic resin such as epoxy and polyester or a synthetic rubber such as butyl rubber and ethylene propylene rubber can be suitably employed. Meanwhile, in Fig. 2, the reference number 24 represents an iron core to be inserted to the center bore 14 of the coil 10.

When the transformer Tr1 is installed in a posture such that the axis of the coil 10 may be horizontal, the outside air flowing in through the right or left opening of the center bore 14 passes through it and flows out through the other opening and the vents 16 to the outside of the transformer Tr1. Thus, rise in the temperature inside the transformer Tr1 can be controlled by the air-cooling action obtained by distributing the outside air through the center bore 14 and the vents 16 of the insulating molding material 12, achieving prevention of reduction in the output and improvement of life. Further, since the transformer Tr1 is covered with the insulating molding material 12, high security against accidents such as earthquakes etc. can be ensured.

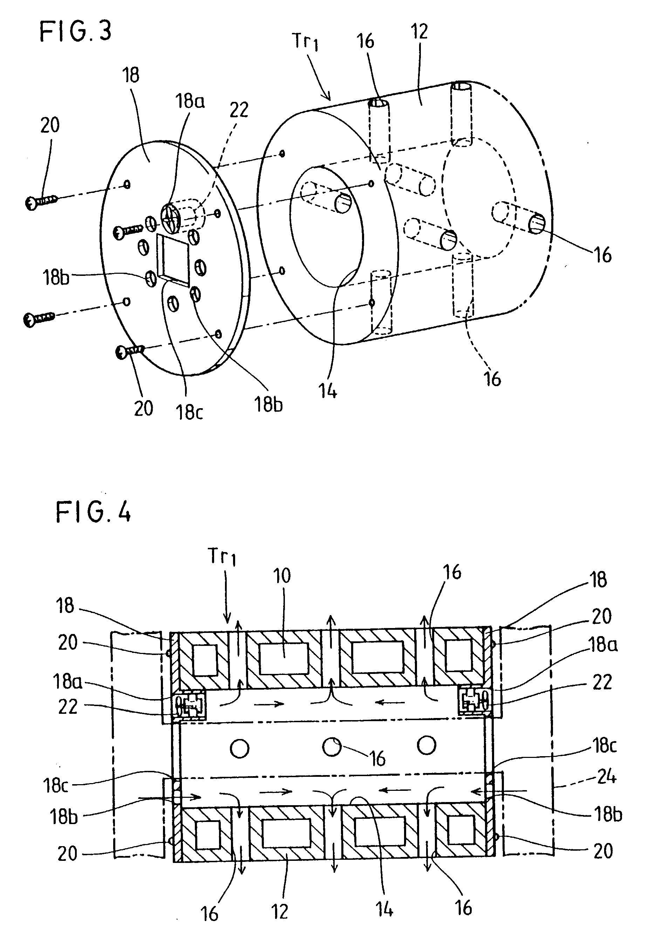

### (Second embodiment : Figures 3 and 4)

Fig. 3 is a perspective appearance of major portions of a transformer to which the transformer structure according to a second embodiment of this invention is applied, in which a lid 18 is detachably attached by a plurality of screws 20 to each axial end of the coil 10 in the transformer Tr1 having the same constitution as in the first embodiment. A first through hole 18a is defined in each lid 18 to open to the center bore 14 defined in the insulating molding material 12 so that the outside air may flow into the center bore 14 through the first through hole 18a. Further, as shown in Fig. 4, an air blower 22 such as a scirocco fan is attached to each lid 18 at a position such that it may be located within the center bore 14 when the lid 18 is attached to the transformer Tr1. This air blower 22 is designed to blow out the outside air sucked therein through the first through hole 18a into the center bore 14. More specifically, by driving the air blower 22, the outside air is distributed forcibly through the center bore 14 and the vents 16 to achieve air-cooling of the transformer, and thus the rise in the temperature inside the transformer Tr1 can be controlled. Incidentally, a plurality of small-diameter second through holes 18b opening to the center bore 14 of the insulating molding material 12 are defined in each lid 18 so that the outside air may flow through these second through holes 18b into the center bore 14. Each lid 18 also has an opening 18c allowing insertion of the iron core 24 therethrough, and the air blower 22 is attached at a position such that it may not interfere with the iron core 24 inserted through the opening 18c to the center bore 14 of the coil 10.

### (Third embodiment)

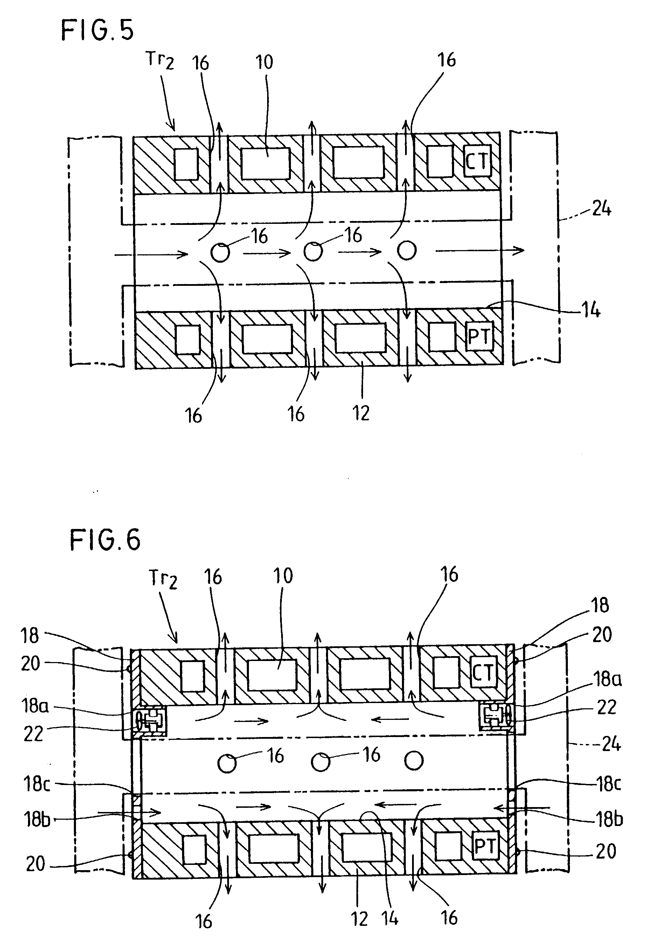

Fig. 5 is a schematic constitutional view of a transformer to which the transformer structure according to a third embodiment of this invention is applied, in which coils of a current transformer CT and those of a potential transformer PT are disposed in no contact with each other adjacent to the coil 10 of a transformer Tr2, and these coils are electrically connected one another based on the principle of electromagnetic induction. In this state, the insulating molding material 12 is charged around the coil 10 of the transformer Tr2 and those of the current transformer CT and of the potential transformer PT to integrate these coils into one block. It should be noted that the transformer Tr2 according to this constitution functions as a power receiving and transforming equipment integrated with a current transformer CT and a potential transformer PT. The center bore 14 and the plurality of vents 16 are defined in the insulating molding material 12 of the integrated transformer Tr2 functioning as the power receiving and transforming equipment like in the first embodiment.

The integrated transformer Tr2 functioning as the power receiving and transforming equipment can be air-cooled by distributing the outside air through the center bore 14 and the vents 16 so as to control rise of the temperature inside the transformer Tr2. Further, in the integrated transformer Tr2 functioning as the power receiving and transforming equipment, since the high-voltage portions are not exposed but covered with the insulating molding material 12, operators can perform cleaning or maintenance and inspection safely free from the fear of receiving electrical shocks.

### (Fourth embodiment)

Fig. 6 is a schematic constitutional view of a transformer to which the transformer structure according to a fourth embodiment of this invention is applied, in which a lid 18 is detachably attached to each axial end of the coil 10 in the integrated transformer Tr2 functioning as the power receiving and transforming equipment having the same constitution as in the third embodiment. The lid 18 is of the same structure as the one described referring to the second embodiment and contains a first through hole 18a, second through holes 18b and an opening 18c, with an air blower 22 being attached to the inner side (the side facing the center bore 14). Accordingly, in this embodiment, the transformer Tr2 can be air-cooled by forcing the outside air to be distributed through the center bore 14 and the vents 16 under driving of the air blowers 22, thus controlling rise of the temperature inside the transformer Tr2.

### (Variations)

While the transformers are installed in a posture such that the axes of the coils thereof may be horizontal in the embodiments described above, this invention is not to be limited to such constitution, and even if the transformers are installed in a posture such that the axes of the coils may be perpendicular, similar effects can be exhibited. Meanwhile, in the second and fourth embodiments, one of the air blowers to be attached to the right and left lids may be omitted. Alternatively, the air blowers to be attached to the lids may be replaced with cooling units to distribute air cooled by the cooling units through the center bore and vents and prevent the temperature of the transformer from rising. Further, the air blowers or the cooling units may be attached to the outer sides of the lids. Incidentally, even when a plurality of transformer structures, each consisting of a transformer disposed in a frame, are horizontally stacked, it is also possible to prevent the temperature of the transformers in the respective structures from rising.

Meanwhile, the integrated transformer functioning as the power receiving and transforming equipment may be of a structure where the coils of the power distribution transformer are coated on the surface with an insulating molding material to a predetermined thickness to form a blocked transformer; the thus formed molded coil block is further blocked integrally with the coils of the current transformer and of the potential transformer by charging an insulating molding material around these coils; and the coils of the current transformer and of the potential transformer are electrically connected to the coils of the blocked transformer within the insulating molding material based on the principle of electromagnetic induction.

It should be apparent to those skilled in the art that the present invention may be embodied in many other specific forms without departing from the spirit or scope of the invention. Therefore, the foregoing examples and embodiments are to be considered as illustrative and not restrictive, and the invention is not to be limited to the details given herein, but may be modified within the scope of the appended claims.

## Claims

1. A transformer structure, comprising a blocked transformer (Tr1), which is formed by coating a coil (10) of a power distribution transformer (Tr1) with an insulating molding material (12), for example, a synthetic resin such as epoxy or a synthetic rubber such as butyl rubber, to a predetermined thickness;
wherein said insulating molding material (12) contains an axially opening center bore (14) defined along the axis of said coil (10) and a plurality of vents (16) communicating to said center bore (14) and opening radially outward; and
the outside air is distributed through said center bore (14) and said vents (16) so as to control rise in the temperature of said transformer (Tr1).

2. A transformer structure, comprising an integrated transformer (Tr2) functioning as a power receiving and transforming equipment, which is formed by disposing coils of a current transformer (CT) and of a potential transformer (PT) adjacent to a coil (10) of a power distribution transformer (Tr2) to electrically connect these coils to one another based on the principle of electromagnetic induction and by charging an insulating molding material (12), for example, a synthetic resin such as epoxy or a synthetic rubber such as butyl rubber, around the coil (10) of said power distribution transformer (Tr2) and those of said current transformer and of said potential transformer (Tr2) so as to integrate these coils into one block;
wherein said insulating molding material (12) contains an axially opening center bore (14) defined along the axis of said coil (10) and a plurality of vents (16) communicating to said center bore (14) and opening radially outward; and
the outside air is distributed through said center bore (14) and said vents (16) so as to control rise in the temperature of said transformer (Tr2).

3. The transformer structure according to Claim 1 or 2, wherein an air blower (22) is provided at a position where it opposes said center bore (14) of said transformer (Tr1,Tr2) to distribute the outside air forcibly through said center bore (14) and said vents (16) by driving said air blower (22).
